# EUROPÄISCHE PATENTSCHRIFT

(11) **EP 3 455 475 B1**
(45) Veröffentlichungstag und Bekanntmachung des Hinweises auf die Patenterteilung: **09.09.2020**
(21) Anmeldenummer: 17723312.9
(22) Anmeldetag: 03.05.2017
(51) Int. Cl.: F01N 3/20

(54) **VORRICHTUNG UND VERFAHREN ZUM VERBESSERN DER RÜCKSAUGBARKEIT VON REDUKTIONSMITTEL IN EINEM ABGASREDUKTIONSSYSTEM**
DEVICE AND METHOD FOR IMPROVING THE BACKSUCTIONABILITY OF REDUCTION AGENT IN AN EXHAUST GAS REDUCTION SYSTEM
DISPOSITIF ET PROCÉDÉ POUR L'AMÉLIORATION DE LA CAPACITÉ D'ASPIRATION DE RÉDUCTEUR DANS UN SYSTÈME DE RÉDUCTION DES GAZ D'ÉCHAPPEMENT

(30) Priorität: 12.05.2016 DE 102016208171
(43) Veröffentlichungstag der Anmeldung: 20.03.2019
(73) Patentinhaber: Robert Bosch GmbH, 70442 Stuttgart (DE)
(72) Erfinder: SULZBERGER, Klaus-Dieter, 74343 Sachsenheim (DE); KREHER, Thilo, 70825 Korntal-Muenchingen (DE); RANKEL, Thorsten, 71229 Leonberg (DE); GERULL, Michael, 74906 Bad Rappenau (DE)
(86) Internationale Anmeldenummer: PCT/EP2017/060443
(87) Internationale Veröffentlichungsnummer: WO 2017/194355

(56) Entgegenhaltungen:
- DE-A1-102010 063 201
- DE-A1-102010 063 201
- DE-A1-102014 004 134
- DE-A1-102014 004 134
- DE-A1-102014 108 499
- DE-A1-102014 108 499
- DE-U1-202008 014 425
- DE-U1-202008 014 425

## Beschreibung

### Stand der Technik

Bei Kraftwagen mit Verbrennungsmotoren, insbesondere Dieselmotoren, muss aufgrund der Abgasgesetzgebung unter anderem der Schadstoff NOₓ reduziert werden. Eine Methode, die dabei zur Anwendung kommt, ist das Verfahren der sogenannten selektiven katalytischen Reduktion ("SCR-Verfahren"), bei dem NOₓ unter Zuhilfenahme eines Reduktionskatalysators und eines flüssigen Reduktionsmittels, insbesondere einer wässrigen Harnstofflösung ("AdBlue" ®), das in den Abgasstrang eingespritzt wird, zu N₂ und H₂O reduziert wird.

Die wässrige Harnstofflösung hat einen relativ hohen Gefrierpunkt, der durch den Zusatz von Frostschutzmitteln nicht beliebig abgesenkt werden kann, ohne die Funktionsfähigkeit als Reduktionsmittel zu beeinträchtigen. Um bei kalten Umgebungstemperaturen das Gefrieren und damit die Bildung von Eisdruck in den Dosierventilen, Leitungen und/oder Schläuchen in Folge der Ausdehnung zu verhindern, wird daher häufig das Reduktionsmittel aus den SCR-Dosierventilen und den damit verbundenen Leitungen bzw. Schläuchen nach dem Abschalten des Motors zurück in den Tank gesaugt.

DE 10 2014 004 134 A1 offenbart eine zur Verwendung als beheizbare Medienleitung im Fahrzeugbereich bestimmte Leitung. Die Leitung umfasst ein Koppelstück, über welches zwei zu beheizende Leitungselemente untereinander in durchgängiger Verbindung stehen. Das Koppelstück bildet das Bindeglied zu einem elektrischen Anschluss und zu zwei Heizleitern, die innerhalb der Leitungselemente und jeweils einer sich an diese anschließenden Kupplung sowie einem Stecker fortgeführt sind. Die Heizleiter sind mittels besonderer Haltelemente in der Form einer Schleife etwa mittig bezüglich eines Strömungsquerschnitts für das jeweilige Medium gehalten, so dass bei kleinem Bauvolumen eine effiziente Beheizung der gesamten Leitung ausgehend von der Kupplung über das Leitungselement, das Koppelstück, das Leitungselement und den Stecker dargestellt ist.

DE 10 2010 063 201 A1 beschreibt ein Leitungselement zum Befördern eines flüssigen oder gasförmigen Mediums, insbesondere eines Hilfsmittels zur Nachbehandlung von Abgasen einer Brennkraftmaschine, vorzugsweise einer wässrigen Hamstofflösung zum Entsticken der Abgase, mit einem Mittel zum zumindest teilweisen Ausgleich einer etwaigen Schwankung eines Drucks des Mediums in dem Leitungselement. Ein erstes starres Leitungsstück und ein zweites starres Leitungsstück des Leitungselements sind über das Mittel dicht und fest verbunden, wobei das Mittel ein die Ausgleichsfunktion des Mittels übernehmendes elastisches Leitungsstück aufweist, und wobei das Medium über das elastische Leitungsstück von dem ersten zum zweiten Leitungsstück oder umgekehrt vom zweiten zum ersten Leitungsstück transportiert werden kann.

DE 10 2014 108 499 A1 offenbart ein beheizbare Fluidleitung mit einem Rohr, das einen Innenraum aufweist, und einer im Innenraum angeordneten Heizeinrichtung. Um eine an die Fluidleitung angeschlossene Einspritzanordnung bei niedrigen Temperaturen zu schützen, ist vorgesehen, dass zwischen dem Rohr und der Heizeinrichtung ein Volumenreduktionselement angeordnet ist.

DE 20 2008 014 425 U1 offenbart einen Mehrkanalschlauch aus einem Schlauchkörper, in dem Leitungskanäle, insbesondere parallel zueinander in Schlauchlängsrichtung verlaufen. Mindestens einer der Leitungskanäle besteht aus einer von dem Schlauchkörper umfassten Rohrleitung, die aus einem Material mit einer im Vergleich zu dem Material des Schlauchkörpers größeren Festigkeit und/oder einer geringeren Medienpermeabilität besteht.

Damit ein nahezu vollständiges Rücksaugen des Reduktionsmittels gewährleistet werden kann, dürfen die Querschnitte der Leitungen nicht zu groß sein. Die Komponenten und Leitungen von SCR-Systemen sind daher so ausgelegt, dass eine verbundene Phasengrenze durch die Geometrie wandern kann.

Auf diese Weise ist ein nahezu vollständiges Entleeren der Leitungen möglich. Ist der Leitungsdurchmesser zu groß, besteht dagegen die Gefahr, dass Luftblasen entstehen und angesaugt werden, während Reduktionsmittel im System zurückbleibt. Aus fertigungstechnischen Gründen kann der Leitungsdurchmesser jedoch nicht beliebig weit reduziert werden. Auch könnte die Leistungsfähigkeit des Abgasreduktionssystems durch einen zu kleinen Leitungsdurchmesser beschränkt werden.

Es ist eine Aufgabe der Erfindung, Reduktionsmittelleitungen mit einem größerem Leitungsdurchmesser zur Verfügung zu stellen, aus denen das Reduktionsmittel nahezu vollständig rücksaugbar ist.

### Offenbarung der Erfindung:

Gemäß einem Ausführungsbeispiel der Erfindung hat eine Reduktionsmittelleitung eines Abgasreduktionssystems einen ersten Querschnitt. In der Reduktionsmittelleitung ist ein Einsatzstück angeordnet, das so ausgebildet ist, dass es den ersten Querschnitt der Reduktionsmittelleitung auf einen zweiten Querschnitt, der kleiner als der erste Querschnitt ist, reduziert. Das Einsatzstück weist eine zylindrische Bohrung mit dem zweiten Querschnitt auf. Das Einsatzstück hat einen abgeschrägten Bereich, der sich von einem Ende der zylindrischen Bohrung zu einer Stirnseite des Einsatzstücks erstreckt.

Gemäß einem Ausführungsbeispiel der Erfindung umfasst ein Verfahren zum Reduzieren der Gefahr von Blasenbildung in einer Reduktionsmittelleitung eines Abgasreduktionssystems, wobei die Reduktionsmittelleitung einen ersten Querschnitt hat, ein Einsatzstück in der Reduktionsmittelleitung anzuordnen, wobei das Einsatzstück den ersten Querschnitt der Reduktionsmittelleitung auf einen zweiten Querschnitt, der kleiner als der erste Querschnitt ist, reduziert.

Das Einsatzstück kann insbesondere in die Reduktionsmittelleitung eingepasst und/oder mit der Reduktionsmittelleitung verschweißt werden.

Durch den Einsatz eines Einsatzstücks gemäß Ausführungsbeispielen der Erfindung ist es möglich, beim Absaugen des Reduktionsmittels in der Reduktionsmittelleitung entstehende Blasen "einzufangen" und die Phasengrenze auf einen größeren Leitungsdurchmesser zu überführen.

Dadurch können Leitungen mit einem größeren Strömungsquerschnitt eingesetzt und durch Rücksaugen nahezu vollständig entleert werden.

Ein Einsatzstück mit einer zylindrischen Bohrung ist besonders einfach herstellbar.

In einer Ausführungsform hat das Einsatzstück eine Länge, die größer als oder gleich dem Durchmesser der zylindrischen Bohrung ist, um ein effektives "Einfangen" der in der Reduktionsmittelleitung entstehende Blasen zu gewährleisten.

In einer Ausführungsform ist der abgeschrägte Bereich so ausgebildet, dass er sich vom zweiten Querschnitt an der zylindrischen Bohrung zum ersten Querschnitt an der Stirnseite des Einsatzstücks aufweitet.

In einer Ausführungsform ist der abgeschrägte Bereich in Bezug auf die Strömungsrichtung des Reduktionsmittels im normalen Betrieb auf der stromaufwärts ausgerichteten Seite des Einsatzstücks ausgebildet. Beim Rücksaugen des Reduktionsmittels ist der abgeschrägte Bereich demzufolge auf der stromabwärts ausgerichteten Seite des Einsatzstücks angeordnet.

Bei einem Kontaktwinkel von 55°, wie er beispielsweise an der Phasengrenze zwischen wässriger Harnstofflösung ("AdBlue" ®) und Stahl auftritt, sollte der Öffnungswinkel einen Wert von 100°, insbesondere einen Wert von 70°, nicht übersteigen.

Ein Einsatzstück, das mit einem oder mehreren dieser Merkmale ausgebildet ist, ist besonders effektiv, beim Rücksaugen entstehende Blasen "einzufangen" und die Phasengrenze auf einen größeren Durchmesser zu überführen, um ein nahezu vollständiges Absaugen des Reduktionsmittel aus den Reduktionsmittelleitungen zu ermöglichen.

### Kurze Beschreibung der Figuren:

Figur 1 zeigt eine Schnittdarstellung eines Abschnitts einer Reduktionsmittelleitung mit einem Einsatzstück gemäß einem Ausführungsbeispiel der Erfindung.

Die Figuren 2a, 2b und 2c sind schematische Darstellungen eines Abschnitts einer Reduktionsmittelleitung mit einem Einsatzstück gemäß einem Ausführungsbeispiel der Erfindung, welche die Funktionsweise der Erfindung veranschaulichen.

### Figurenbeschreibung

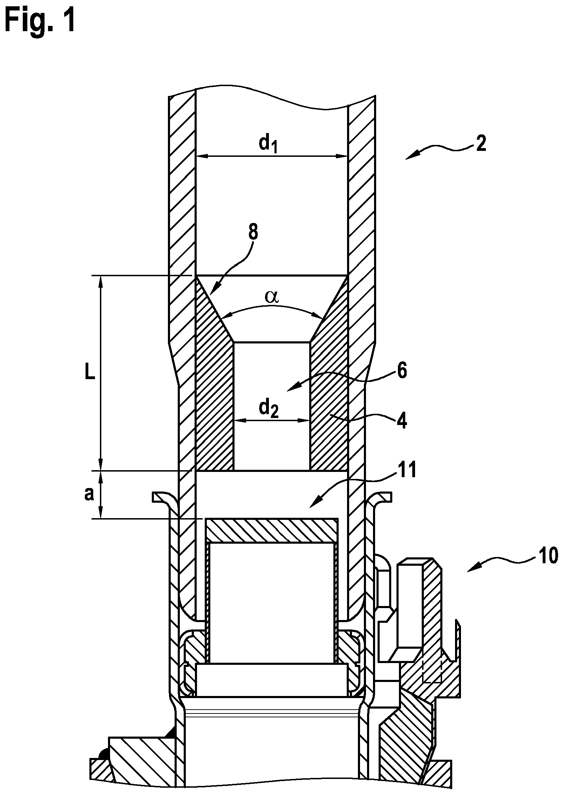

Figur 1 zeigt ein Ausführungsbeispiel der Erfindung in einer schematischen Schnittdarstellung.

Eine Reduktionsmittelleitung 2 ist mit dem Zulauf eines Dosierventils 10 eines Abgasreduktionssystems verbunden, um dieses mit flüssigem Reduktionsmittel, beispielsweise einer wässrigen Harnstofflösung ("AdBlue"®) zu versorgen.

Im Zulauf des Dosierventils 10 ist ein Filterelement 11 angeordnet, um zu verhindern, dass Schmutzpartikel in das Dosierventil 10 eindringen.

Die Reduktionsmittelleitung 2 ist zylindrisch mit einem ersten Durchmesser d₁ ausgebildet, so dass sie einen ersten Querschnitt hat. In einem Abstand a von dem Dosierventil 10 ist in der Reduktionsmittelleitung 2 ein Einsatzstück 4 angeordnet. Das Einsatzstück 4 kann in die Reduktionsmittelleitung 2 eingepasst und/oder mit dem Innenumfang der Reduktionsmittelleitung 2 verschweißt sein, um eine Verschiebung des Einsatzstücks 4 entlang der Reduktionsmittelleitung 2 zuverlässig zu verhindern.

Die Reduktionsmittelleitung 2 kann eine metallische Reduktionsmittelleitung 2 sein, die Teil des Dosierventils 10 ist, wie in der Figur 1 gezeigt. Ein Einsatzstück 4 gemäß Ausführungsbeispielen der Erfindung kann auch in eine als Kunststoff- oder Silikonschlauch ausgebildeten Reduktionsmittelleitung eingesetzt werden, die mit der metallischen Reduktionsmittelleitung 2 verbunden ist, um das Dosierventil 10 mit Reduktionsmittel zu versorgen.

Um das nicht-rücksaugbare Volumen zu minimieren, wird der Abstand a zwischen der Oberkante des Filterelements 11 und dem Einsatzstück 4 möglichst klein gewählt, ohne dabei hydraulisch zu drosseln. Der Abstand a kann beispielsweise 1 mm bis 2 mm betragen.

In dem Einsatzstück 4 ist entlang seiner Längsrichtung, die parallel zur Strömungsrichtung des Reduktionsmittels ausgerichtet ist, eine zylindrische Bohrung 6 ausgebildet. Der Durchmesser d₂ der zylindrischen Bohrung 6 ist kleiner als der Durchmesser d₁ der Reduktionsmittelleitung 2, so dass der Querschnitt der zylindrischen Bohrung 6 kleiner als der Querschnitt der Reduktionsmittelleitung 2 ist.

Der Querschnitt der Reduktionsmittelleitung 2 wird daher im Bereich des Einsatzstücks auf einen zweiten Querschnitt, der kleiner als der erste Querschnitt der Reduktionsmittelleitung 2 ist, reduziert.

Hat die Reduktionsmittelleitung 2 einen Durchmesser d₁ im Bereich von 4 mm bis 6 mm, kann der Durchmesser d₂ der zylindrischen Bohrung 6 beispielsweise 2 mm bis 3 mm betragen.

Das Einsatzstück 4 hat in der Strömungsrichtung des Reduktionsmittels entlang der Reduktionsmittelleitung 2 eine Länge L, die vorzugsweise größer oder gleich dem Durchmesser d₂ der zylindrischen Bohrung 6 ist. Das Einsatzstück 4 kann beispielsweise eine Länge L von 2 mm bis 5 mm, insbesondere eine Länge L von 3 bis 4 mm haben.

Auf seiner von dem Dosierventil 10 abgewandten Seite, d.h. auf der in Bezug auf die normale Strömungsrichtung des Reduktionsmittels im Betrieb des Dosierventils 10 stromaufwärts ausgerichteten Seite des Einsatzstücks 4 ist ein trichterförmiger abgeschrägter Bereich (Fase) 8 ausgebildet. Der abgeschrägte Bereich 8 weitet sich vom zweiten Querschnitt der zylindrischen Bohrung 6 mit dem Durchmesser d₂ auf den ersten Querschnitt der Reduktionsmittelleitung 2 mit dem Durchmesser d₁ auf.

Der optimale Wert für den Öffnungswinkel a des abgeschrägten Bereichs 8 ist von der Oberflächenspannung des Reduktionsmittels und dem Kontaktwinkel β zwischen dem Reduktionsmittel und dem Material der Reduktionsmittelleitung 2, d.h. einer Eigenschaft der Stoffpaarung aus dem Reduktionsmittel und dem Material der Reduktionsmittelleitung 2, abhängig.

Ist der Kontaktwinkel β bei einer anderen Stoffpaarung, z.B. wenn ein Kunststoff- oder Silikonschlauch als Reduktionsmittelleitung 2 verwendet wird, größer, was einer geringerem Benetzbarkeit entspricht, kann auch der Öffnungswinkel α des Einsatzstücks 4 größer gewählt werden.

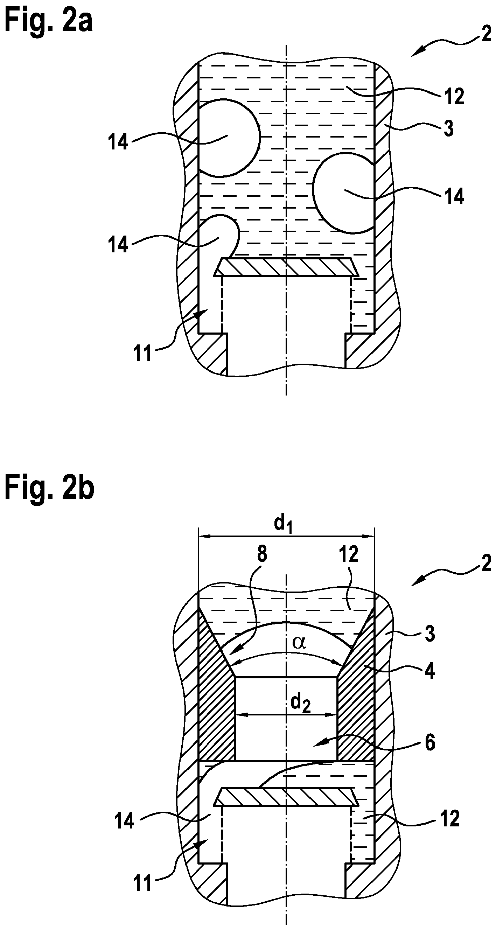

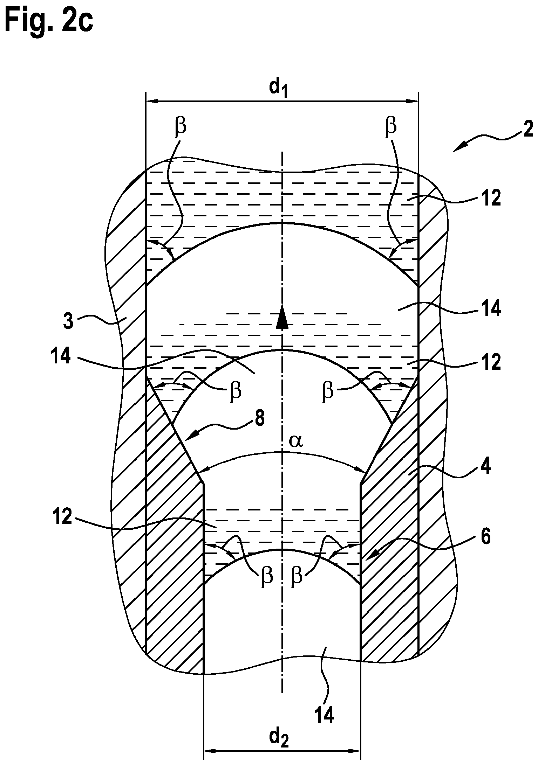

Die Figuren 2a, 2b und 2c veranschaulichen schematisch die Funktionsweise eines Einsatzstücks 4 gemäß einem Ausführungsbeispiel der Erfindung.

Figur 2a zeigt schematisch die Entstehung von Luftblasen 14 beim Rücksaugen des Reduktionsmittels 12, beispielsweise am Filterelement 11 des Dosierventils 10.. Da die Luftblasen 14 den Querschnitt der Reduktionsmittelleitung 2 nicht vollständig ausfüllen, werden die Luftblasen 14 (in der Darstellung der Figur 2a nach oben) abgesaugt, während Reduktionsmittel 12 im Raum zwischen den Luftblasen 14 und der Wand 3 der Reduktionsmittelleitung 2 verbleibt. Der an das Filterelemt 11 anschließende, in der Figur 2a oben dargestellte große Leitungsquerschnitt ist daher nicht vollständig rücksaugbar und in der Reduktionsmittelleitung 2 bleibt eine nicht unerhebliche Menge an Reduktionsmittel 12 zurück.

Die Figuren 2b und 2c zeigen ein ähnliches Szenario, wobei oberhalb des Filterelements 11 zusätzlich ein Einsatzstück 4 ("eine Blasenfalle") gemäß einem Ausführungsbeispiel der Erfindung in der Reduktionsmittelleitung 2 angeordnet ist.

Das Einsatzstück 4 weist eine zylindrische Bohrung 6 auf, deren Innendurchmesser d₂, so gewählt ist, dass er kleiner als der Durchmesser der in den Figuren 2a bis 2c von unten ankommenden Luftblasen 14 ist. Die Luftblasen 14 füllen daher den Querschnitt der zylindrischen Bohrung 6 vollständig aus. Anschließend, wie in den Figuren 2b und 2c weiter oben dargestellt, wird der Durchmesser d₂ der zylindrischen Bohrung 6 durch einen abgeschrägten Bereich 8 mit einem ausreichend kleinen Öffnungswinkel α auf den gewünschten Durchmesser d₁ der Reduktionsmittelleitung 2 aufgeweitet.

Bei einem Kontaktwinkel β von 55°, wie er beispielsweise an der Phasengrenze zwischen wässriger Harnstofflösung und Stahl auftritt, darf der Öffnungswinkel a einen Wert von 100°, insbesondere einen Wert von 70° nicht übersteigen. Auf diese Weise wird sichergestellt, dass die Phasengrenze von dem kleinen auf den großen Querschnitt übergeht, wie in der Figur 2c gezeigt, ohne dass sich Luftblasen 14 ausbilden, die den Querschnitt der Reduktionsmittelleitung 2 nicht vollständig ausfüllen.

Bei einem größeren Kontaktwinkel β, wie er beispielsweise an der Phasengrenze zwischen wässriger Harnstofflösung und Kunststoff oder Silikon auftritt, kann auch der Öffnungswinkel α dementsprechend größer gewählt werden.

Die Reduktionsmittelleitung 2 ist daher auch bei einem größeren Durchmesser d₁ nahezu vollständig rücksaugbar, so dass sie nach dem Rücksaugvorgang weitgehend frei von Reduktionsmittel 12 ist.

## Patentansprüche

1. Reduktionsmittelleitung (2) eines Abgasreduktionssystems, wobei die Reduktionsmittelleitung (2) einen ersten Querschnitt hat und wobei in der Reduktionsmittelleitung (2) ein Einsatzstück (4) angeordnet ist, das so ausgebildet ist, dass es den Querschnitt der Reduktionsmittelleitung (2) auf einen zweiten Querschnitt reduziert, der kleiner als der erste Querschnitt ist, wobei das Einsatzstück (4) eine zylindrische Bohrung (6) aufweist, die den zweiten Querschnitt hat;
**dadurch gekennzeichnet, dass** das Einsatzstück (4) einen abgeschrägten Bereich (8) aufweist, der sich von einem Ende der zylindrischen Bohrung (6) zu einer Stirnseite des Einsatzstücks (4) erstreckt.

2. Reduktionsmittelleitung (2) nach Anspruch 1, wobei das Einsatzstück (4) eine Länge (L) hat, die größer als der oder gleich dem Durchmesser (d) der zylindrischen Bohrung (6) ist.

3. Reduktionsmittelleitung (2) nach Anspruch 1 oder 2, wobei sich der abgeschrägte Bereich (8) vom zweiten Querschnitt an der der zylindrischen Bohrung (6) zum ersten Querschnitt an der Stirnseite des Einsatzstücks (4) aufweitet.

4. Reduktionsmittelleitung (2) nach einem der vorhergehenden Ansprüche, wobei der abgeschrägte Bereich (8) einen Öffnungswinkel (α) von nicht mehr als 100°, insbesondere einen Öffnungswinkel (α) von nicht mehr als 70°, aufweist.

5. Reduktionsmittelleitung (2) nach einem der vorhergehenden Ansprüche, wobei der abgeschrägte Bereich (8) in Bezug auf die Strömungsrichtung des Reduktionsmittels im normalen Betrieb auf der stromaufwärts ausgerichteten Seite des Einsatzstücks (4) ausgebildet ist.

6. Reduktionsmittelleitung (2) nach einem der vorhergehenden Ansprüche, wobei das Einsatzstück (4) in die Reduktionsmittelleitung (2) eingepasst und/oder mit der Reduktionsmittelleitung (2) verschweißt ist.

7. Verfahren zum Reduzieren der Gefahr von Blasenbildung in einer Reduktionsmittelleitung (2) eines Abgasreduktionssystems, wobei die Reduktionsmittelleitung (2) einen ersten Querschnitt hat und wobei das Verfahren umfasst, ein Einsatzstück (4), das so ausgebildet ist, dass es den Querschnitt der Reduktionsmittelleitung (2) auf einen zweiten Querschnitt, der kleiner als der erste Querschnitt ist, reduziert, in der Reduktionsmittelleitung (2) anzuordnen, wobei das Einsatzstück (4) eine zylindrische Bohrung (6) aufweist, die den zweiten Querschnitt hat;
**dadurch gekennzeichnet, dass** das Einsatzstück (4) einen abgeschrägten Bereich (8) aufweist, der sich von einem Ende der zylindrischen Bohrung (6) zu einer Stirnseite des Einsatzstücks (4) erstreckt..

8. Verfahren nach Anspruch 7, wobei das Verfahren umfasst, das Einsatzstück (4) in die Reduktionsmittelleitung (2) und/oder das Einsatzstück (4) mit der Reduktionsmittelleitung (2) zu verschweißen.

## Claims

1. Reducing agent line (2) of an exhaust-gas reduction system, wherein the reducing agent line (2) has a first cross section and wherein, in the reducing agent line (2), there is arranged an insert piece (4) which is designed so as to reduce the cross section of the reducing agent line (2) to a second cross section which is smaller than the first cross section, wherein the insert piece (4) has a cylindrical bore (6) which has the second cross section;
**characterized in that** the insert piece (4) has a bevelled region (8) which extends from an end of the cylindrical bore (6) to an end side of the insert piece (4) .

2. Reducing agent line (2) according to Claim 1, wherein the insert piece (4) has a length (L) greater than or equal to the diameter (d) of the cylindrical bore (6) .

3. Reducing agent line (2) according to Claim 1 or 2, wherein the bevelled region (8) widens from the second cross section at the cylindrical bore (6) to the first cross section at the end side of the insert piece (4).

4. Reducing agent line (2) according to any of the preceding claims, wherein the bevelled region (8) has an opening angle (α) of no greater than 100°, in particular has an opening angle (α) of no greater than 70°.

5. Reducing agent line (2) according to any of the preceding claims, wherein the bevelled region (8) is, in relation to the flow direction of the reducing agent during normal operation, formed on that side of the insert piece (4) which is directed upstream.

6. Reducing agent line (2) according to any of the preceding claims, wherein the insert piece (4) is fitted into the reducing agent line. (2) and/or is welded to the reducing agent line (2).

7. Method for reducing the risk of bubble formation in a reducing agent line (2) of an exhaust-gas reduction system, wherein the
reducing agent line (2) has a first cross section and wherein the
method comprises arranging an insert piece (4), which is formed so as to reduce the cross section of the reducing agent line (2) to a second cross section which is smaller than the first cross section, in the reducing agent line (2), wherein the insert piece (4) has a cylindrical bore (6) which has the second cross section;
**characterized in that** the insert piece (4) has a bevelled region (8) which extends from an end of the cylindrical bore (6) to an end side of the insert piece (4) .

8. Method according to Claim 7, wherein the method comprises welding the insert piece (4) into the reducing agent line (2) and/or the insert piece (4) to the reducing agent line (2).

## Revendications

1. Conduite de réducteur (2) d'un système de réduction de gaz d'échappement, la conduite de réducteur (2) ayant une première section transversale et une pièce d'insertion (4) étant agencée dans la conduite de réducteur (2), qui est configurée de telle sorte qu'elle réduise la section transversale de la conduite de réducteur (2) à une deuxième section transversale, qui est plus petite que la première section transversale, la pièce d'insertion (4) comprenant un alésage cylindrique (6), qui a la deuxième section transversale ;
**caractérisée en ce que** la pièce d'insertion (4) comprend une zone biseautée (8), qui s'étend depuis une extrémité de l'alésage cylindrique (6) jusqu'à un côté frontal de la pièce d'insertion (4).

2. Conduite de réducteur (2) selon la revendication 1, dans laquelle la pièce d'insertion (4) a une longueur (L), qui est supérieure ou égale au diamètre (d) de l'alésage cylindrique (6).

3. Conduite de réducteur (2) selon la revendication 1 ou 2, dans laquelle la zone biseautée (8) s'élargit de la deuxième section transversale au niveau de l'alésage cylindrique (6) à la première section transversale au niveau du côté frontal de la pièce d'insertion (4).

4. Conduite de réducteur (2) selon l'une quelconque des revendications précédentes, dans laquelle la zone biseautée (8) présente un angle d'ouverture (α) inférieur ou égal à 100°, notamment un angle d'ouverture (α) inférieur ou égal à 70°.

5. Conduite de réducteur (2) selon l'une quelconque des revendications précédentes, dans laquelle la zone biseautée (8) est formée par rapport à la direction d'écoulement du réducteur en mode d'exploitation normal sur le côté dirigé vers l'amont de la pièce d'insertion (4) .

6. Conduite de réducteur (2) selon l'une quelconque des revendications précédentes, dans laquelle la pièce d'insertion (4) est emboîtée dans la conduite de réducteur (2) et/ou soudée avec la conduite de réducteur (2).

7. Procédé de réduction du risque de formation de bulles dans une conduite de réducteur (2) d'un système de réduction de gaz d'échappement, la conduite de réducteur (2) ayant une première section transversale et le procédé comprenant l'agencement d'une pièce d'insertion (4), qui est configurée pour réduire la section transversale de la conduite de réducteur (2) à une deuxième section transversale, qui est plus petite que la première section transversale, dans la conduite de réducteur (2), la pièce d'insertion (4) comprenant un alésage cylindrique (6), qui a la deuxième section transversale ;
**caractérisé en ce que** la pièce d'insertion (4) comprend une zone biseautée (8), qui s'étend depuis une extrémité de l'alésage cylindrique (6) jusqu'à un côté frontal de la pièce d'insertion (4).

8. Procédé selon la revendication 7, dans lequel le procédé comprend le soudage de la pièce d'insertion (4) dans la conduite de réducteur (2) et/ou de la pièce d'insertion (4) avec la conduite de réducteur (2).
